# EUROPÄISCHE PATENTSCHRIFT

(11) **EP 1 476 855 B1**
(45) Veröffentlichungstag und Bekanntmachung des Hinweises auf die Patenterteilung: **08.08.2007**
(21) Anmeldenummer: 03708039.7
(22) Anmeldetag: 18.02.2003
(51) Int. Cl.: G07F 7/08, G07F 19/00, G07F 5/18

(54) **ABRUF VON AKTIONEN AN AUSGABEGERÄTEN DURCH MOBILFUNKGERÄTE**
OUTPUT-DEVICE ACTION CALL-UP BY MOBILE RADIO DEVICES
APPEL D'ACTIONS A DES UNITES DE SORTIE PAR APPAREILS TELEPHONIQUES MOBILES

(30) Priorität: 20.02.2002 DE 10208197
(43) Veröffentlichungstag der Anmeldung: 17.11.2004
(73) Patentinhaber: SIEMENS AKTIENGESELLSCHAFT, 80333 München (DE)
(72) Erfinder: PREHOFER, Christian, 81477 München (DE)
(86) Internationale Anmeldenummer: PCT/DE2003/000508
(87) Internationale Veröffentlichungsnummer: WO 2003/071500

(56) Entgegenhaltungen:
- EP-A- 0 848 360
- EP-A- 1 096 439
- EP-A- 1 168 257
- EP-A- 1 184 818
- WO-A-01/45058
- DE-C- 10 039 569

## Beschreibung

Die Erfindung betrifft ein Verfahren zum Abruf von Aktionen an Ausgabegeräten, die von einer Zentrale aus gesteuert werden.

Mobilfunkgeräte oder auch mobile Datenverarbeitungs-Endgeräte mit einer Luftschnittstelle können in Zukunft verschiedene Möglichkeiten von mobilen Transaktionen unterstützen. Oft ist es dabei erforderlich, dass an einem anderen Gerät eine Ausgabe erfolgt oder ein Dienst für den Nutzer zur Verfügung gestellt. Bei einem solchen Szenario verwaltet eine Zentrale, beispielsweise eine Bank, eine große Zahl von Geräten. Beispiel hierfür sind:
- Der Benutzer will ein Dokument an einem öffentlichen Drucker ausdrucken, der über einen zentralen Druckdienst im Netz gesteuert wird.
- Der Benutzer will ein Getränk an einem Automaten über einen zentralen Dienst einkaufen.
- Der Benutzer will an einem Spielautomaten spielen und dies über einen zentralen Dienst abrechnen.
- Der Benutzer will seinen Kontoauszug an einem Auszugsdrucker vor Ort über den zentralen Dienst der Bank ausdrucken.
- Der Benutzer will ein Fax über ein entsprechendes Gerät verschicken oder davon eine Kopie erstellen.

Der Vorteil des zentralen Dienstes ist, dass der Benutzer immer nur eine einheitliche Kontaktadresse benötigt und dort auch beispielsweise sein Konto führen kann. In diesen Szenarien besteht das Problem darin, dass sich der Benutzer bei einem zentralen Dienst anmeldet, der aber eine große Zahl von Ausgabegeräten verwaltet. Da der Aufenthaltsort des Benutzers oft nicht genau bekannt ist, muss das richtige Ausgabegerät ermittelt werden. Selbst wenn das Ausgabegerät genau bekannt ist, kann oft das gewünschte Ausgabegerät selbst nicht bestimmt werden, wenn beispielsweise zwei Ausgabegeräte direkt nebeneinander stehen.

Zum Abruf von einer Aktion an einem Ausgabegerät kann dieses durch eine vielstellige Identifikationsnummer identifiziert werden. Dies ist jetzt für den Benutzer umständlich und fehlerbehaftet.

Der Erfindung liegt die Aufgabe zugrunde, ein Verfahren zum Abruf von Aktionen an Ausgabegeräten anzugeben, das für den Benutzer einfach handhabbar ist.

Diese Aufgabe wird erfindungsgemäß durch die im Patentanspruch angegebenen Merkmale gelöst.

Im Folgenden wird die Erfindung anhand eines Ausführungsbeispieles beschrieben.

Die Erfindung geht aus von einer Zentrale, die eine Vielzahl von Ausgabegeräten wie beispielsweise Druckern, Getränkeautomaten, Faxgeräten und ähnlichem mehr ansteuert. Der Benutzer selbst verwendet ein Mobilfunkgerät beziehungsweise Mobiltelefon über das er drahtlos mit der Zentrale kommunizieren kann.

In dem erfindungsgemäßen Verfahren zum Abruf von Aktionen an Ausgabegeräten werden folgende Schritte ausgeführt:
1. Der Benutzer meldet sich mit seinem Mobilfunkgerät bei einer Zentrale an und fordert die Ausgabe an. Die hierbei notwendigen Schritte wie beispielsweise die Authentifizierung sind für die Erfindung von untergeordneter Bedeutung und werden hier nicht näher beschrieben.
2. Die Zentrale ermittelt den Aufenthaltsort des Benutzers und bestimmt die in Frage kommenden Ausgabegeräte. Der Ort kann beispielsweise über den Mobilfunkbetreiber oder externe Dienste festgestellt werden. Die in Frage kommenden Ausgabegeräte sind alle Geräte, die momentan nicht in Verwendung sind und sich beispielsweise in der Reichweite des Benutzers befinden.
3. Auf jeden dieser Ausgabegeräte wird jeweils eine für diese Anfrage und dieses Mobilfunkgerät beziehungsweise den Teilnehmer eindeutig erzeugte Transaktionsnummer angezeigt. Aufgrund dieser Nummer kann das vom Benutzer gewünschte Gerät ermittelt werden.
4. Der Benutzer gibt eine der Transaktionsnummern auf seinem Mobilfunkgerät ein und diese wird an die Zentrale übertragen.
5. Die Zentrale kann anhand dieser Nummer das gewählte Ausgabegerät ermitteln und dort die Ausgabe beziehungsweise die Freischaltung eines Dienstes veranlassen.

Falls ein anderer Benutzer eine nicht für ihn erzeugte Transaktionsnummer eingibt, kann aufgrund der Zuordnung der Nummer zum Mobilfunkgerät eine falsche Aktion am Ausgabegerät verhindert werden.

Das erfindungsgemäße Verfahren stellt auch sicher, dass sich der Benutzer wirklich am Gerät befindet, und nicht eine Fehlbedienung vorliegt. Die Transaktionsnummern werden vorzugsweise immer neu vergeben und nur für eine kurze Zeitspanne gültig geschaltet.

Falls am Ausgabegerät eine Tastatur oder eine sonstige Eingabevorrichtung vorhanden ist, so kann die Eingabe der Transaktionsnummer auch direkt am Ausgabegerät selbst erfolgen.

Beim erfindungsgemäßen Verfahren ist keine Eingabe- beziehungsweise kein Kommunikationsmedium am Ausgabegerät erforderlich, da das Mobilfunkgerät des Benutzers nicht direkt mit dem Ausgabegerät kommuniziert.

Die Transaktionsnummer kann verglichen mit der Identifikationsnummer des Ausgabegerätes wesentlich kürzer sein, sodass sich der Aufwand für den Benutzer und die Möglichkeit der Fehlbedienung reduzieren.

## Patentansprüche

1. Verfahren zum Abruf von Aktionen an Ausgabegeräten, die von einer Zentrale aus gesteuert werden,
bei dem von einem Mobilfunkgerät eine Anforderung an die Zentrale gesendet wird,
bei dem die Position des Mobilfunkgerätes und daraus verfügbare Ausgabegeräte ermittelt werden,
bei dem an diesen verfügbaren Ausgabegeräten jeweils eine Transaktionsnummer angezeigt wird, und
bei dem durch Eingabe dieser Transaktionsnummer am Mobilfunkgerät oder am Ausgabegerät die Aktion erfolgt.

## Claims

1. Method for calling up actions on output devices controlled from a centre,
wherein a request is sent from a mobile radio device to the centre,
wherein the position of the mobile radio device and output devices available therefrom are determined,
wherein a transaction number is displayed respectively at these available output devices and
wherein the action takes place by inputting said transaction number at the mobile radio device or at the output device.

## Revendications

1. Procédé d'appel d'actions au niveau d'unités de sortie commandées depuis un central,
dans lequel une demande est envoyée au central par un appareil de radiotéléphonie mobile,
dans lequel la position de l'appareil de radiotéléphonie mobile et, à partir de là, les unités de sortie disponibles sont déterminées,
dans lequel un numéro de transaction est affiché à chaque fois sur ces unités de sortie disponibles et
dans lequel l'action est effectuée en entrant ce numéro de transaction sur l'appareil de radiotéléphonie mobile ou sur l'unité de sortie.
